# EUROPÄISCHE PATENTSCHRIFT

(11) **EP 3 091 517 B1**
(45) Veröffentlichungstag und Bekanntmachung des Hinweises auf die Patenterteilung: **28.06.2017**
(21) Anmeldenummer: 15166565.0
(22) Anmeldetag: 06.05.2015
(51) Int. Cl.: G08B 17/107, G08B 29/14, G01J 1/42, G01N 21/53

(54) **OFFENER STREULICHTRAUCHMELDER SOWIE PRÜFGERÄT FÜR EINEN DERARTIGEN OFFENEN STREULICHTRAUCHMELDER**
OPEN SCATTERED-LIGHT SMOKE DETECTOR AND TESTING DEVICE FOR SUCH AN OPEN SCATTERED-LIGHT SMOKE DETECTOR
DÉTECTEUR DE FUMÉE À ÉCRAN DIFFUSANT OUVERT ET APPAREIL DE CONTRÔLE POUR UN TEL DÉTECTEUR DE FUMÉE À ÉCRAN DIFFUSANT OUVERT

(43) Veröffentlichungstag der Anmeldung: 09.11.2016
(73) Patentinhaber: Siemens Schweiz AG, 8047 Zürich (CH)
(72) Erfinder: Fischer, Martin, 8180 Bülach (CH)
(74) Vertreter: Maier, Daniel Oliver

(56) Entgegenhaltungen:
- EP-A1- 1 191 496
- EP-A1- 2 093 734
- EP-A2- 1 583 055

## Beschreibung

Die Erfindung betrifft einen offenen Streulichtrauchmelder, der einen Lichtsender zum Aussenden von Licht insbesondere im optisch nichtsichtbaren Bereich und einen spektral darauf abgestimmten Lichtempfänger aufweist. Der Melder umfasst eine mit dem Lichtsender und dem Lichtempfänger verbundene Steuereinheit. Letztere ist dazu eingerichtet, den Lichtsender wiederholt, insbesondere periodisch, mit einer gepulsten Signalfolge zum Aussenden entsprechender Lichtimpulse anzusteuern sowie eine empfangene Signalfolge des Lichtempfängers zeitlich auszuwerten und einen Brandalarm auszugeben, falls eine Signalstärke der empfangenen Signalfolge einen Mindestwert für die Rauchkonzentration überschreitet.

Weiterhin betrifft die Erfindung ein Prüfgerät zum Prüfen eines derartigen offenen Streulichtrauchmelders.

Die gepulste Signalfolge ist vorzugsweise ein rechteckiges Taktsignal, das den Lichtsender z.B. über einen Schalter im gleichen Takt ansteuert, sodass eine Folge von periodischen Lichtimpulsen im Lichtsender erzeugt wird. Im Anschluss folgt wieder eine Dunkeltastung. Durch die signaltechnische Filterung des Lichtempfängers auf dieselbe Taktfrequenz werden Lichtsignale mit anderen Frequenzen wirksam unterdrückt.

Offene Streulichtrauchmelder sind beispielsweise in der internationalen Patentanmeldung WO 2001/031602 A1 oder in der Europäischen Patentanmeldung EP 2 093 733 A1 beschrieben.

In der europäischen Patentanmeldung EP 1 191 496 A1 ist gleichfalls ein offener Streulichtrauchmelder beschrieben. Ein dortiger Amplitudenmodulator des Streulichtrauchmelders formt aus dem elektrischen Signal der Senderansteuerung eine Impulsfolge und führt dadurch eine Amplitudenmodulation durch. In der einfachsten Form ist dies ein Schalter, so dass eine Folge von periodischen Lichtimpulsen im Lichtsender erzeugt wird und dann wieder eine Dunkeltastung durchgeführt wird und dies abwechselnd in einem Takt, den der Amplitudenmodulator vorgibt. Ein Prozessor wertet dann die Empfangssignale im Vergleich zu diesen gesendeten Signalen, die der Amplitudenmodulator dem Prozessor direkt überträgt, aus. Dadurch ist der Prozessor in der Lage, einerseits eine Entfernungsbestimmung anhand der Phasenverschiebung zwischen den gesendeten und den empfangenen Impulsen durchzuführen und andererseits zu überprüfen, ob es sich um eine Rauchwolke oder um einen Gegenstand handelt. Bei einem festen Gegenstand bleibt die Breite der empfangenen Impulse im Vergleich zur Breite der gesendeten Impulse unverändert (Fig. 6). Trifft dagegen die gesendete Impulsfolge auf eine Rauchwolke, so verbreitern sich die Impulse der gesendeten Impulsfolge, und es kommt zu einer Pulsdispersion, da viele Streuzentren in der Rauchwolke vorliegen (Fig. 7). Die Breite der empfangenen Impulse ist dann ein Maß dafür, ob Rauch vorliegt oder nicht.

Es ist eine Aufgabe der Erfindung, einen offenen Rauchmelder anzugeben, der auf einfache Weise geprüft werden kann.

Die Aufgabe wird mit den Gegenständen des Hauptanspruchs gelöst. Vorteilhafte Ausführungsformen der vorliegenden Erfindung sind in den abhängigen Ansprüchen angegeben.

Erfindungsgemäss ist die Steuereinheit dazu eingerichtet, den Melder von einem normalen Betriebsmodus in einen (ersten) Servicemodus zu schalten, falls sich ein melderseitig ermittelter Phasenwinkel zwischen einer ausgesendeten und empfangenen Signalfolge um einen (vorgegebenen) Mindestwinkelwert ändert, der laufzeittechnisch einer Zunahme der optischen Wegstrecke von Lichtsender zu Lichtempfänger von mehr als 6 m, insbesondere von mehr als 10 m oder 20 m und vorzugsweise von mehr als 50 m entspricht.

Mit "normalen Betriebsmodus" ist gemeint, dass der erfindungsgemässe Melder in einem detektierten Brandfall einen Brandalarm bzw. eine Brandmeldung ausgibt.

Mit "Servicemodus" ist jeder Modus des Streulichtrauchmelders gemeint, der keinen normalen Betriebsmodus darstellt. Er kann auch als Prüfmodus oder Testmodus bezeichnet werden.

Mit der "optischen Wegstrecke" ist hier der Signalweg von Lichtsender zu dem im Freien liegenden Detektionsraum als Streulichtzentrum und zurück zum Lichtempfänger gemeint. Dabei kann davon ausgegangen werden, dass immer ein gewisses Reststreulicht aus dem Detektionsraum, wenn auch in sehr geringem Masse, durch den Lichtempfänger detektierbar.

Typischerweise liegt der Detektionsraum für die optische Rauchdetektion circa 5 bis 10 cm vor dem Melder. Die Zunahme der optischen Wegstrecke von 6 m bzw. 10 m würde somit bedeuten, dass sich das Streulichtzentrum in einem radialen Abstand von 3 m bzw. von 5 m vom Melder entfernt befindet. Die Zunahme der optischen Wegstrecke geht zugleich mit einer Zunahme der Signallaufzeit einher, wobei das ausgesandte und wieder empfangene Licht der Signalfolge sich mit Lichtgeschwindigkeit ausbreitet.

Der Kern der Erfindung liegt in der Erkenntnis, dass eine derartige, vor allem abrupte, ungewöhnlich grosse und somit unplausible Zunahme des Phasenwinkels sicher nicht durch die Zunahme der optischen Wegstrecke selbst versucht worden sein kann. Ein entsprechendes Streulichtsignal aus einem Detektionsraum in einem Abstand von 3 m oder 5 m, und insbesondere in einem Abstand von 10 m oder gar 25 m wäre für eine zuverlässige Auswertung schlichtweg zu gering und durch Umgebungslicht im optischen Spektrum des Lichtempfängers überdeckt. Diese Zunahme kann folglich als Kriterium für eine gezielte Einflussnahme auf den Betriebsmodus des erfindungsgemässen Streulichtrauchmelders herangezogen werden, wie z.B. mit einem dafür vorgesehenen erfindungsgemässen Prüfgerät.

Die ungewöhnliche Zunahme des Phasenwinkels ist gleichbedeutend mit einer ungewöhnlich Zunahme der Signallaufzeit einer vom Lichtsender ausgesandten und an einem entfernt liegenden Objekt zum Lichtempfänger zurückgestreuten Folge von Lichtimpulsen.

Mit "abrupt" ist in diesem Zusammenhang gemeint, dass eine solche Phasenwinkelzunahme von einer Signalfolgenperiode auf eine darauffolgende Signalfolgenperiode ermittelt wird, und vorzugsweise über wenige Signalfolgeperioden hinweg, wie z.B. im Bereich von 2 bis 5, konstant ist.

Die Steuereinheit des erfindungsgemässen Melders kann nun dahingehend eingerichtet sein, dass im Servicemodus z.B. vorteilhaft ein Test des Alarmsounders durchgeführt wird, indem der Melder kurzzeitig einen akustischen Alarm mit gegebenenfalls stark reduzierter Lautstärke ausgibt. Dadurch kann auf einen Prüftaster verzichtet werden.

Alternativ oder zusätzlich kann die Steuereinheit dazu eingerichtet sein, kurzzeitig einen optischen Alarm am Melder auszugeben. Es kann auf einen Prüftaster verzichtet werden.

Alternativ oder zusätzlich kann die Steuereinheit dazu eingerichtet sein, im Servicemodus die Ausgabe eines Brandalarms zu beschleunigen, indem z.B. keine Mittelung über mehrere Messwerte hinweg erfolgt. Dadurch ist eine schnellere Melderprüfung durch einen Servicetechniker möglich, der hierzu z.B. ein Prüfaerosol in den Detektionsraum einsprüht.

Alternativ oder zusätzlich kann die Steuereinheit dazu eingerichtet sein, einen Testalarm oder eine Testmeldung an eine übergeordnete Brandmeldezentrale im Servicemodus auszugeben.

Alternativ oder zusätzlich kann die Steuereinheit dazu eingerichtet sein, den Melder in einen inaktiven Stromsparmodus zu schalten.

Typischerweise steuert die Steuereinheit den Lichtsender periodisch mit einer gepulsten Signalfolge zum Aussenden entsprechender Lichtimpulse an, wie z.B. alle 2 Sekunden. Eine gepulste Signalfolge kann dabei mehrere Hundert bis einige Tausend Pulse aufweisen. Die Dauer einer solchen Signalfolge selbst liegt im Bereich von 0.25 bis 2 Millisekunden. Die Dauer eines einzelnen Pulses liegt typischerweise im Bereich von 0.5 bis 2 Mikrosekunden. Das Verhältnis der Signalfolgenperiode zur Zeitdauer einer Signalfolge selbst liegt somit im Bereich von zwei bis drei Größenordnungen darüber.

Der zuvor genannte Lichtsender ist üblicherweise eine Leuchtdiode, die vorzugsweise Licht in einem für den Menschen optisch nichtsichtbaren Bereich aussendet. Die Leuchtdiode ist vorzugsweise eine Infrarot-Leuchtdiode oder eine UV-Leuchtdiode. Der Lichtempfänger ist vorzugsweise eine Photodiode oder ein Phototransistor. Die Steuereinheit ist vorzugsweise prozessorgestützt und insbesondere ein Mikrocontroller.

Nach einer weiteren Ausführungsform ist die Steuereinheit dazu eingerichtet, den Streulichtrauchmelder in Abhängigkeit des melderseitig ermittelten Phasenwinkels in zumindest einen weiteren Servicemodus zu schalten. Es ist dem jeweiligen weiteren Servicemodus ein weiterer Mindestwinkelwert zugeordnet, der grösser ist als der Mindestwinkelwert. Die jeweiligen weiteren Mindestwinkelwerte sind voneinander verschieden.

Dadurch kann der erfindungsgemässe Streulichtrauchmelder mittels eines dafür vorgesehenen Prüfgeräts in verschiedene Servicemodi geschaltet werden, wie diese zuvor exemplarisch beschrieben worden sind. Der Mindestwinkelwert kann dann z.B. für den (ersten) Servicemodus bei 30° liegen. Ein weiterer (zweiter) Mindestwinkelwert kann dann für einen weiteren (zweiten) Servicemodus bei 45°, ein weiterer (dritter) Mindestwinkelwert für einen weiteren (dritten) Servicemodus bei 60° und ein weiterer (vierter) Mindestwinkelwert für einen weiteren (vierten) Servicemodus bei 75° liegen.

Vorzugsweise ist die Steuereinheit dazu eingerichtet, den Melder entsprechend dem ermittelten Phasenwinkelwert in den jeweiligen Servicemodus zu schalten, dem der höchste Mindestwinkelwert zugeordnet ist. Nimmt gemäss dem vorherigen Beispiel der Phasenwinkel um 65° zu, so schaltet die Steuereinheit den Melder in den weiteren (dritten) Servicemodus, da der Phasenwinkel den hierfür zugeordneten weiteren (dritte) Mindestwinkelwert von 60° überschreitet. Die Steuereinheit schaltet den Melder jedoch nicht in den weiteren (vierten) Servicemodus, da der dafür zugeordnete weitere (vierte) Mindestwinkelwert von 75° nicht erreicht wird.

Nach einer vorteilhaften Ausführungsform ist die Steuereinheit des Melders dazu eingerichtet, die Ausgabe eines Brandalarms in einem detektierten Brandfall individuell in einem jeweiligen Servicemodus zu unterdrücken. Dadurch wird z.B. bei Reinigungsarbeiten am Melder mittels eines Wedels vorteilhaft kein Fehlalarm ausgelöst und ausgegeben. Gerade derartige Wedelbewegungen ähneln in ihrem Muster solchen von fluktuierenden Rauchschwaden.

Nach einer vorteilhaften Ausführungsform weist der Melder eine Phasenermittlungseinrichtung zur Ermittlung eines aktuellen Phasenwinkels zwischen einer ausgesendeten und empfangenen Signalfolge auf. Die Phasenermittlungseinrichtung gibt ein Servicesignal aus, falls der ermittelte aktuelle Phasenwinkel insbesondere abrupt um den Mindestwinkelwert zunimmt oder um zumindest einen der weiteren Mindestwinkelwerte zunimmt Die Phasenermittlungseinrichtung kann in der Steuereinheit selbst integriert sein oder auch als Software realisiert sein. Die Steuereinheit ist dazu eingerichtet, auf Basis des Servicesignals dann intern die Ausgabe des möglichen Brandalarms zu unterdrücken.

Vorzugsweise liegt der Mindestwinkelwert in einem Bereich von 10° bis 360° liegt, insbesondere bei 180° ± 30°.

Nach einer Ausführungsform ist die Steuereinheit dazu eingerichtet, den Melder für eine Mindestzeit vom normalen Betriebsmodus in den Servicemodus zu schalten und/oder den Melder bei bereits vorliegendem Servicemodus wieder in den normalen Betriebsmodus zu schalten, falls der melderseitig ermittelte Phasenwinkel erneut um den Mindestwinkelwert oder um den jeweiligen weiteren Mindestwinkelwert zunimmt.

Dadurch kann der Rauchmelder für eine vorgegebene Zeit gezielt deaktiviert werden, um eine Alarmauslösung zu unterbinden, wenn mit einer vorhersehbaren, ungefährlichen oder kontrollierten Rauchentwicklung zu rechnen ist, wie z.B. beim Flambieren oder bei Schweissarbeiten. Die vorgegebene Zeit liegt vorzugsweise in einem Bereich von 5 bis 30 Minuten.

Insbesondere ist die Steuereinheit dazu eingerichtet, das Vorliegen des Servicemodus optisch und/oder akustisch am Melder anzuzeigen und/oder über einen drahtgebundenen oder drahtlosen Melderbus an eine Brandmeldezentrale zu signalisieren.

Nach einer besonderen Ausführungsform ist die Steuereinheit dazu eingerichtet, im Servicemodus den Lichtsender oder einen weiteren Lichtsender, wie z.B. eine IR-LED zur Umgebungsüberwachung des Melders auf strömungsabschirmende Objekte hin, mit einem binären Datensignal anzusteuern. Dazu kodiert das Datensignal interne Melderdaten, welche die aktuelle Signalstärke der empfangenen Signalfolge, Kalibrierungsdaten für den optischen Pfads des Melders, Konfigurationsdaten, Betriebsdaten, eine Positionsangabe des Melder-Montageorts, eine Seriennummer und/oder Busadresse des Melders umfassen.

Der aktuelle Wert der Signalstärke wird dabei auf Basis einer empfangenen Folge von gepulsten Lichtsignalen, insbesondere von Infrarotlichtimpulsen ermittelt, die von einem zur Prüfung des erfindungsgemässen Streulichtrauchmelders vorgesehenen und dazu eingerichteten Prüfgerät ausgesandt wird.

Das Datensignal kann dabei als Bitfolge, als Folge eines Manchester-Codes, eines Biphase-Mark-Codes, eines Return-to-Zero-Codes, eines Puls-Positions-Codes oder eines Puls-Breiten-Codes kodiert sein. Es kann auf einem Datenübertragungsprotokoll für Infrarotkommunikation basieren, insbesondere auf einem IRDA-Standard. Es kann alternativ oder zusätzlich auf einem Datenübertragungsprotokoll für Infrarot-Fernbedienungen basieren, insbesondere auf einem RC-5- oder RC-6-Datenübertragungsprotokoll.

Wird die aktuelle Signalstärke der empfangenen Signalfolge im Servicemodus ausgegeben, wie z.B. in kodierter Form als Prozentwert, dann kann dieser Wert direkt auf einem erfindungsgemässen Prüfgerät angezeigt werden und durch einen Fachmann im Rahmen einer Melderprüfung berücksichtigt werden.

Weiterhin können Kalibrierungsdaten für den optischen Pfads des Melders ausgegeben werden, wie z.B. melderinterne Werte für die Verstärkung des Lichtempfängers sowie für die Treiberstufe des Lichtsenders. Dadurch ist mit Hilfe des Prüfgeräts, wie später im Detail erläutert, eine komplette Prüfung des optischen Pfads des Melders möglich.

Es können auch Konfigurationsdaten des Melders ausgegeben werden, wie z.B. die Abtastfrequenz, die Lautstärke eines akustischen Alarmgebers oder ein eingestellter Betriebsartmodus des Melders, wie z.B. ein robuster Betrieb in rauer Umgebung oder ein sensibler Betrieb in einem Büro.

Weiterhin können Betriebsdaten, wie z.B. Fehlerdaten, Ereignisdaten oder ein aktueller Batterieladezustand, oder eine Positionsangabe des Melder-Montageorts, wie z.B. in Form von GPS-Daten, oder eine Seriennummer aus der Herstellung und/ oder eine Busadresse des Melders für die Kommunikation mit einer Gefahrenmeldezentrale ausgegeben werden.

Die Aufgabe der Erfindung wird weiterhin mit einem Prüfgerät zum Prüfen eines erfindungsgemässen Streulichtrauchmelders gelöst. Das Prüfgerät weist dazu eine spektral auf den Lichtsender und auf den Lichtempfänger des Streulichtrauchmelders abgestimmte Lichtempfangseinheit und Lichtsendeeinheit auf. Weiterhin weist das Prüfgerät eine mit der Lichtempfangseinheit und der Lichtsendeeinheit verbundene Steuereinrichtung, wie z.B. einen Mikrocontroller, auf. Letztere ist dazu eingerichtet, ein mittels der Lichtempfangseinheit empfangenes gepulstes Lichtsignal, insbesondere ein gepulstes Infrarotsignal, um zumindest den vorgegebenen Mindestwinkelwert oder um zumindest den jeweiligen vorgegebenen weiteren Mindestwinkelwert als verzögertes Lichtsignal mittels der Lichtsendeeinheit verzögert auszugeben.

Dadurch lässt sich vorteilhaft, wie eingangs beschrieben, der zu prüfende offene Streulichtrauchmelder von einem Betriebsmodus in einen oder mehrere Servicemodi schalten. Es kann auch z.B. ein bei der Prüfung des Streulichtrauchmelders möglicher detektierter Brandalarm unterdrückt werden.

Einer weiteren Ausführungsform zufolge weist das Prüfgerät eine benutzerseitige Ausgabeeinheit auf. Die Steuereinrichtung des Prüfgeräts ist dazu eingerichtet, das empfangene gepulste, d.h. binäre Lichtsignal bzw. das Infrarotsignal auf eine mögliche gültige Kodierung hin zu analysieren, mit der die aktuelle Signalstärke des Melders und/oder die Kalibrierungsdaten des optischen Pfads der Streulichtanordnung, die Konfigurationsdaten, die Betriebsdaten, die Positionsangabe des Melder-Montageorts, die Seriennummer und/oder die Busadresse des Melders kodiert sind.

Durch die Darstellung der zuvor genannten Daten ist vorteilhaft eine Bewertung der Funktionstüchtigkeit des Streulichtrauchmelders vor Ort durch einen Servicemann möglich. Für den Servicefachmann ist dann sofort erkennbar, ob z.B. der gesamte optische Pfad des aktuell geprüften Streulichtrauchmelders noch innerhalb zulässiger Toleranzen liegt oder nicht. Der "optische Pfad" umfasst alle optische und optoelektronischen Bauelemente der Streulichtanordnung, die für die Rauchdetektion vorgesehen sind. Unzulässige Unterschreitungen des empfangenen Signalstärkewerts deuten hierbei auf eine Verschmutzung von Teilen des optischen Pfads oder auf eine altersabhängige Degeneration der optoelektronischen Bauelemente im optischen Pfad der Streulichtanordnung des Melders hin.

Nach einer besonders vorteilhaften Ausführungsform ist die Steuereinrichtung dazu eingerichtet, den Sendesignalpegel der Lichtsendeeinheit und/oder die Zeitverzögerung für das auszugebende zeitverzögerte Lichtsignal mittels der Lichtsendeeinheit basierend auf einem Abstand zwischen dem Prüfgerät und dem zu prüfenden Streulichtrauchmelder anzupassen. Der Abstand kann z.B. über eine Eingabetastatur des Prüfgeräts durch einen Benutzer eingegeben werden.

Der Signalpegel einer Lichtquelle nimmt bekanntlich quadratisch mit dem Abstand von der Lichtquelle ab. Durch eine entsprechende abstandsabhängige Anpassung des Sendesignalpegels der Lichtsendeeinheit empfängt der zu prüfende Streulichtrauchmelder das vom Prüfgerät gesendete Lichtsignal mit einem im Wesentlichen gleichen Signalpegel. Im Idealfall bleibt bei einer vorgenommenen Vergrösserung oder Verkleinerung des Abstands der auf der Anzeigeeinheit des Prüfgeräts angezeigte, vom geprüften Streulichtrauchmelder empfangene aktuelle Signalstärkewert unverändert. Vorausgesetzt ist dabei, dass die Lichtsendeeinheit des Prüfgeräts zumindest grob in die Richtung zum Lichtempfänger des Melders zeigt. Vorzugsweise ist dem Lichtempfänger des Melders eine Optik vorgeschaltet, wie z.B. eine Sammellinse, so dass Licht mit gleicher Intensität aus verschiedenen Richtungen mit einem etwa gleichen Empfangspegel detektiert werden kann.

Nach einer Ausführungsform weist das Prüfgerät eine Abstandsmesseinrichtung zur Erfassung des Abstands zwischen Prüfgerät und dem zu prüfenden Streulichtrauchmelder auf. Der ermittelte Abstand wird durch die Steuereinrichtung des Prüfgeräts erfasst. Die Abstandsmesseinrichtung kann z.B. eine Laser-Abstandsmesseinrichtung im Sinne eines Laserpointers sein.

Nach einer weiteren Ausführungsform ist das Prüfgerät ein Smartphone, ein Tablet-PC oder ein Notebook ist. Insbesondere weisen diese dann eine Infrarot-Schnittstelle, wie z.B. eine IRDA-Schnittstelle, auf.

Die Erfindung sowie vorteilhafte Ausführungen der vorliegenden Erfindung werden am Beispiel der nachfolgenden Figuren erläutert. Dabei zeigen:
- FIG 1: beispielhaft einen offenen Streulichtrauchmelder und ein zugehöriges Prüfgerät gemäss der Erfindung,
- FIG 2: ein Blockschaltbild eines erfindungsgemässen Streulichtrauchmelders,
- FIG 3: ein Blockschaltbild eines erfindungsgemässen Prüfgeräts zum Prüfen eines erfindungsgemässen offenen Streulichtrauchmelders und
- FIG 4: ein Beispiel für eine periodische gepulste Signalfolge eines Streulichtrauchmelders mit einem zeitlich dazwischenliegenden binären Datensignal zur Ausgabe melderseitiger Daten gemäss der Erfindung.

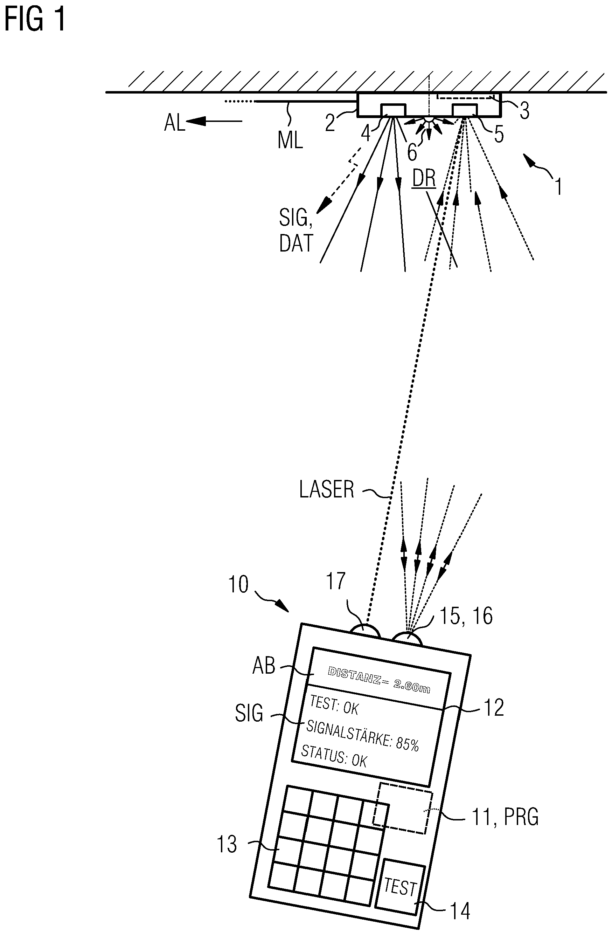

FIG 1 zeigt beispielhaft einen offenen Streulichtrauchmelder 1 und ein zugehöriges Prüfgerät 10 gemäss der Erfindung. Der im oberen Teil der FIG 1 gezeigte Streulichtrauchmelder 1 ist an einer Decke angebracht. Mit dem Bezugszeichen 2 ist ein Meldergehäuse bezeichnet. Der Melder 1 weist zudem eine elektronische Steuereinheit 3 zur elektrischen Ansteuerung einer Infrarot-LED 4 als Lichtsender mit einer gepulsten Signalfolge und zum Erfassen und zeitlichen Auswerten eines von einer IR-Photodiode 5 als Lichtempfänger empfangenen Signalfolge auf. Mit DR ist ein ausserhalb des Meldergehäuses 2 liegender Detektionsraum für die Rauchdetektion bezeichnet.

Im Falle eines detektierten Brandalarms AL, d.h. wenn eine entsprechende Signalstärke der empfangenen Signalfolge einen Mindestwert für die Rauchkonzentration übersteigt, wird dieser Brandalarm AL über eine angeschlossene Melderleitung ML oder Melderbus an eine übergeordnete Brandmeldezentrale weitergeleitet. Mit dem Bezugszeichen 6 ist ein weiterer Lichtsender, insbesondere eine Infrarot-LED, bezeichnet, der bzw. die zur Überwachung von strömungsabschirmenden Objekten in einem Umkreis vorzugsweise von einem halben Meter um den Melder 1 vorgesehen ist.

Gemäss der Erfindung ist die Steuereinheit 3 nun dazu eingerichtet, den Streulichtrauchmelder 1 von einem normalen Betriebsmodus in einen Servicemodus zu schalten, falls sich ein melderseitig ermittelter Phasenwinkel zwischen einer ausgesendeten und empfangenen Signalfolge um einen Mindestwinkelwert ändert, der laufzeittechnisch einer Zunahme der optischen Wegstrecke von Lichtsender zu Lichtempfänger von mehr als 6 m oder 10 m entspricht. In diesem Servicemodus erfolgt im vorliegenden Beispiel keine Ausgabe eines Brandalarms AL. Anstelle des Brandalarms AL kann z.B. auch eine Prüfinformation auf die Melderleitung ML ausgegeben werden, um gegebenenfalls die übergeordnete Brandmeldezentrale zu informieren.

Erreicht wird dieses Umschalten durch das gezeigte, erfindungsgemässe Prüfgerät 10, welches zum Prüfen eines derartigen Streulichtrauchmelders 1 vorgesehen und eingerichtet ist. Ein solches Prüfgerät 10 umfasst eine spektral auf den Lichtsender 4, 6 und auf den Lichtempfänger 5 des Streulichtrauchmelders 1 abgestimmte Lichtempfangseinheit 16 und Lichtsendeeinheit 15. Beide Einheiten 16, 15 können auch in einem Bauelement z.B. als IRDA-Schnittstelle zusammengefasst sein. Vorzugsweise handelt es sich bei allen hier genannten optoelektronischen Bauelementen 4, 5, 6, 15, 16 um Infrarot-Bauelemente im selben Wellenlängenbereich, wie z.B. bei einer typischen Wellenlänge von 940 nm. Eine elektronische Steuereinrichtung 11 des Prüfgeräts 10 ist dazu eingerichtet, ein mittels der Lichtempfangseinheit 16 empfangenes gepulstes Lichtsignal um mehr als den vorgegebenen Mindestwinkelwert als verzögertes Lichtsignal mittels der Lichtsendeeinheit 15 auszugeben.

Die elektronische Steuereinrichtung 11 des erfindungsgemässen Prüfgeräts 10 kann vorteilhaft auch dazu eingerichtet sein, die Amplitude der ausgesandten Lichtimpulsfolge zu modulieren, um charakteristische Fluktuationen von Rauchschwaden zu imitieren. Die Fluktuationen weisen dabei typischerweise eine Frequenz im Bereich von wenigen Hertz, wie z.B. im Bereich von 0.5 bis 2 Hz auf.

Dieses vom Prüfgerät 10 ausgegebene gepulste phasenverzögerte Lichtsignal wird nun durch den erfindungsgemässen Melders 1 als solches erkannt. Der Melder 1 schaltet daraufhin in den Servicemodus um. Die Steuereinheit 3 ist im vorliegenden Beispiel dazu eingerichtet, auch in diesem Servicemodus eine Branddetektion durchzuführen. Hierzu wertet die Steuereinheit 3 die Signalstärke SIG der empfangenen Signalfolge und gegebenenfalls in der Signalfolge vorhandene, für Rauch charakteristische Fluktuationen aus. Die Prüfung des erfindungsgemässen Streulichtrauchmelders 1 ist dann abgeschlossen, wenn auf Basis der empfangenen Signalfolge ein Brandfall detektiert worden ist und dieser z.B. am Melder 1 optisch und/oder akustisch signalisiert worden ist. Die Ausgabe dieses Brandalarms AL an eine übergeordnete Brandmeldezentrale wird hier im Servicemodus unterdrückt. Auf diese Weise ist vorteilhaft eine funktionale Prüfung des erfindungsgemässen Streulichtrauchmelders 1 möglich.

Mit dem Bezugszeichen PRG ist ferner ein Programm oder eine Applikation bezeichnet, die zur Durchführung der zuvor beschriebenen Funktion der Steuereinrichtung 11 geladen ist.

Das gezeigte Prüfgerät 10 weist zudem eine Anzeigeeinheit 12, ein als Tastatur ausgebildetes benutzerseitiges Eingabefeld 13 sowie eine Test-Taste 14 auf, die allesamt auch durch eine berührungssensitive Anzeigeeinheit, wie z.B. durch einen Touchscreen eines Smartphones, realisiert sein kann. Auf der Anzeigeeinheit 12 können, wie bereits dargestellt, ein Abstandsmesswert AB, eine durch den Streulichtrauchmelder 1 ermittelte Signalstärke SIG sowie weitere Daten des Melders 1 ausgegeben werden. Im vorliegenden Beispiel weist das Prüfgerät 10 auch bereits eine Abstandsmesseinrichtung 17 zur Erfassung des Abstands AB zwischen dem Prüfgerät 10 und dem gezeigten Melder 1 mittels eines Laserstrahls LASER auf. Der messtechnisch ermittelte Abstandswert in Höhe von 2.60 Metern ist für die gezeigte Anordnung der FIG 1 auf der Anzeigeeinheit 12 ausgegeben.

Gemäss der Erfindung ist die Steuereinheit 3 bereits dazu eingerichtet, im Servicemodus den Lichtsender 4 oder den weiteren Lichtsender 6 mit einem binären Datensignal anzusteuern. Dieses Datensignal kodiert interne Melderdaten DAT, d.h. melderseitig erfasste interne Daten des Melders 1. Diese Melderdaten DAT umfassen wie gezeigt die aktuelle Signalstärke SIG der empfangenen Signalfolge des Melders 1. Darüber hinaus können weitere Melderdaten DAT ausgegeben werden, wie z.B. Kalibrierungsdaten für den optischen Pfads des Melders 1, Konfigurationsdaten, Betriebsdaten, eine Positionsangabe des Melder-Montageorts, eine Seriennummer und/oder eine Busadresse des Melders.

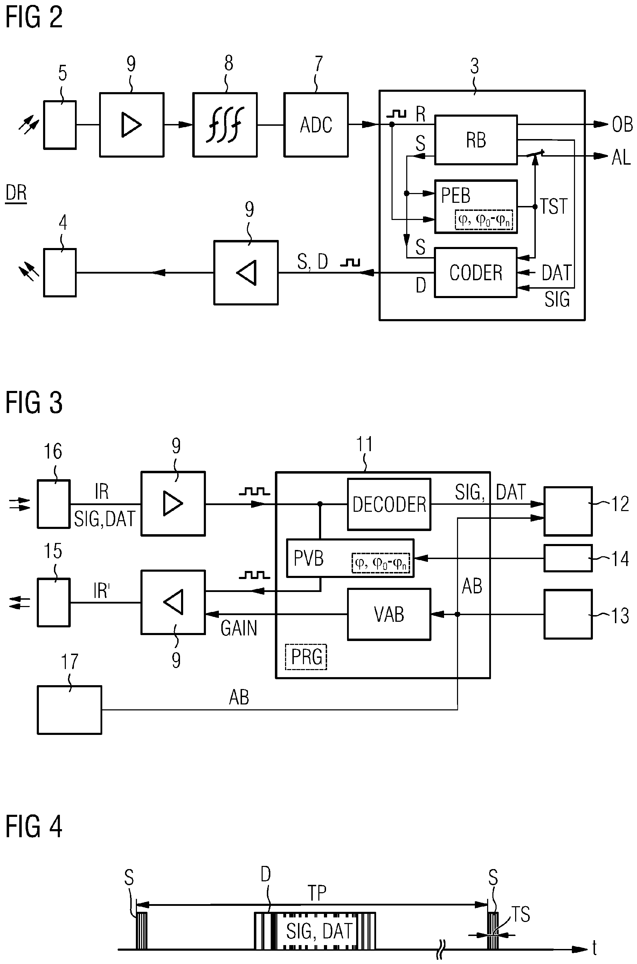

FIG 2 zeigt ein Blockschaltbild eines erfindungsgemässen Streulichtrauchmelders 1. Im linken Teil der Figur sind der Lichtsender 4 und der Lichtempfänger 5 gezeigt.

Dem Lichtsender 4 ist ein Signalaufbereiter, wie z.B. ein Verstärker 9 vorgeschaltet, der eine periodisch von der Steuereinheit 3 ausgegebene Signalfolge S sowie das binäre Datensignal D ausgibt. Das Datensignal D ist dabei ein die Melderdaten DAT und die Signalstärke SIG kodierendes serielles Signal. Hierzu umfasst die Steuereinheit 3 einen als Software realisierten Kodiererblock CODER, dem eingangsseitig die Melderdaten DAT, die aktuell erfasste Signalstärke SIG als Digitalwerte sowie ein Schalt- oder Unterdrückungssignal TST für das Vorliegen eines Servicemodus zugeführt werden. Der Kodiererblock CODER setzt dann bei Vorliegen des Servicemodus, oder auch unabhängig davon, die zugeführten Melderdaten DAT sowie die Signalstärke SIG z.B. als Bitfolge, als Folge eines Manchester-Codes, eines Biphase-Mark-Codes, eines Return-to-Zero-Codes, eines Puls-Positions-Codes oder eines Puls-Breiten-Codes um. Wie die zugehörige FIG 4 zeigt, erfolgt die Ausgabe des binären Datensignals D durch den Kodiererblock CODER vorzugsweise zwischen zwei ausgesendeten gepulsten Signalfolgen S.

Dem gezeigten Lichtempfänger 5 folgt ein Signalverstärker 9 zum Verstärken des empfangenen Lichtsignals bzw. Infrarotsignals. Der nachgeschaltete Bandpassfilter 8 lässt überwiegend nur Signalanteile passieren, die mit der Taktfrequenz der gesendeten Signalfolge S übereinstimmen. In der Praxis wird zunächst nur der Wechselanteil im Lichtempfänger-Empfangssignals signaltechnisch betrachtet und dann mittels eines auf die Taktfrequenz abgestimmten Bandpassfilters 8 gefiltert. Ein nachgeschalteter A/D-Umsetzer 7 setzt das gefilterte Signal in eine Folge von Digitalwerten um, die als empfangene Signalfolge R signaltechnisch mit der gesendeten Signalfolge S korrelieren. Der A/D-Umsetzer 7 kann auch integraler Teil der Steuereinheit 3 selbst sein. Das so gefilterte und digitalisierte Signal wird dann rechnerisch gleichgerichtet und geglättet.

Ein z.B. als Software realisierter Rauchdetektionsblock RB der Steuereinheit 3 erzeugt periodisch eine gepulste Signalfolge S, die dem Verstärker 9 für den Lichtsender 4 eingangsseitig zugeführt wird. Der Rauchdetektionsblock RB wertet die zugehörige empfangene Signalfolge R auf Brandkenngrössen hin aus und gibt im detektierten Fall einen Brandalarm AL bzw. eine Alarmmeldung aus. Ausgangsseitig stellt der Rauchdetektionsblock RB einen aktuell aus der empfangenen Signalfolge R ermittelten Signalstärkewert SIG zur Weiterverarbeitung durch den Kodiererblock CODER bereit. Parallel dazu gibt der Rauchdetektionsblock RB eine Warnmeldung OB im Fall detektierter strömungsabschirmender Objekte in der Umgebung des Streulichtrauchmelders 1 aus, falls eine empfangene Signalfolge R für eine längere Zeit im Wesentlichen unverändert bleibt. Im Signalweg für die Alarmausgabe ist gemäss der Erfindung noch ein nicht weiter bezeichneter Schalter erkennbar, der hinsichtlich seiner Schaltfunktion zur Unterdrückung des Brandalarms AL vorgesehen ist. Das entsprechende Schaltsignal TST wird im vorliegenden Beispiel von einem weiteren als Software realisierten Phasenermittlungsblock PEB ausgegeben. Der Schalter ist vorzugsweise gleichfalls als Software z.B. in Form einer Variablen realisiert.

Gemäss der Erfindung ist die Steuereinheit 3 dazu eingerichtet, die Ausgabe des möglichen Brandalarms AL nun zu unterdrücken, falls ein durch diese Phasenermittlungseinrichtung PEB ermittelter Phasenwinkels um einen Mindestwinkelwert ϕ₀ oder um zumindest den jeweiligen vorgegebenen weiteren Mindestwinkelwert ϕ₁ - ϕₙ zunimmt. "n" bezeichnet hier die Anzahl möglicher weiterer Mindestwinkelwerte und die entsprechende Anzahl von möglichen weiteren zugeordneten Servicemodi. Die Anzahl liegt vorzugsweise im einstelligen Bereich. Zur Ermittlung des Phasenwinkels sind allgemein bekannte Lock-In-Filter bekannt, die aufgrund der heutigen Leistungsfähigkeit von Mikrocontrollern als Steuereinheiten 3 mittels Software realisiert werden können. Der Phasenermittlungsblock PEB wertet hierzu die Phasenlage zwischen der gesendeten gepulsten Signalfolge S und der empfangenen Signalfolge R aus. Überschreitet die Zunahme des ermittelten Phasenwinkels ϕ den vorgegebenen Mindestwinkelwert ϕ₀, so wird ausgangsseitig das Schaltsignal TST ausgegeben.

FIG 3 zeigt ein Blockschaltbild eines erfindungsgemässen Prüfgeräts 10 zum Prüfen eines erfindungsgemässen offenen Streulichtrauchmelders 1.

Im linken Teil der FIG 3 ist mit dem Bezugszeichen 15 eine Lichtsendeeinheit 15 und mit 16 eine Lichtempfangseinheit bezeichnet.

Die Lichtempfangseinheit 16 ist spektral auf den Lichtsender des zu prüfenden Streulichtrauchmelders sowie zum Empfang eines gepulsten Infrarotsignals IR eingerichtet, welches periodisch vom erfindungsgemässen Streulichtrauchmelder ausgegeben wird und mit der aktuellen Signalstärke SIG sowie mit Melderdaten DAT kodiert sein kann. Das empfangene Infrarotsignal IR wird zunächst verstärkt und aufbereitet, wie z.B. mittels eines Komparators. Das so digitalisierte Signal wird einem als Software realisierten Dekodiererblock DECODER der Steuereinrichtung 11 zugeführt. Der Dekodiererblock DECODER ist dazu eingerichtet, das empfangene gepulste Infrarotsignal IR auf eine mögliche gültige Kodierung hin zu analysieren, mit welcher die aktuelle Signalstärke SIG des Streulichtrauchmelders 1 und/oder die Kalibrierungsdaten des optischen Pfads der Streulichtanordnung, die Konfigurationsdaten, die Betriebsdaten, die Positionsangabe des Melder-Montageorts, die Seriennummer und/oder die Busadresse des Streulichtrauchmelders kodiert sind. Im Falle einer gültigen Dekodierung wird der dekodierte Signalstärkewert SIG bzw. die Melderdaten DAT auf der Anzeigeeinheit 12 der Prüfgeräts 10 ausgegeben.

Parallel dazu wird das digitalisierte Signal einem als Software realisierten Verzögerungsblock VB der Steuereinrichtung 11 zugeführt. Dieser gibt für den Fall, dass die Test-Taste 14 zum Start der Prüfung am Prüfgerät 10 gedrückt worden ist, das empfangene gepulste Infrarotsignal IR um den vorgegebenen Mindestwinkelwert ϕ₀ verzögert an einen nachgeschalteten Verstärker 9 aus. Der Verstärker 9 verstärkt das verzögerte Infrarotsignal IR' abhängig von einem Verstärkungsgrad GAIN und gibt dieses dann an die Lichtsendeeinheit 15 aus.

Über das als Tastatur ausgebildete benutzerseitige Eingabefeld 13 kann auch die Ziffer eines weiteren Servicemodus ausgegeben werden. Wird dann die Test-Taste 14 zum Start der Prüfung am Prüfgerät 10 gedrückt, so wird das empfangene gepulste Infrarotsignal IR um den vorgegebenen weiteren, der eingegebenen Ziffer entsprechenden Mindestwinkelwert ϕ₁ - ϕₙ verzögert an den nachgeschalteten Verstärker 9 ausgegeben.

Mit VAB ist ein Verstärkungsanpassungsblock bezeichnet, der den Verstärkungsgrad GAIN in Abhängigkeit von einem erfassten oder gemessenen Abstandswert AB des Prüfgeräts 10 zum Melder 1 ermittelt und an den Verstärker 9 ausgibt, um dadurch den Signalpegel der ausgesandten Lichtimpulse anzupassen. Der Verstärkungsgrad GAIN kann auch zur Amplitudenmodulation zur Imitierung von charakteristischen Fluktuationen von Rauchschaden verändert werden. Der Abstandswert AB kann, wie zuvor beschrieben, messtechnisch mittels einer Abstandsmesseinrichtung 17 ermittelt werden oder über ein Tastenfeld 13 des Prüfgeräts 10 benutzerseitig eingegeben werden.

FIG 4 zeigt ein Beispiel für eine periodische gepulste Signalfolge S eines Streulichtrauchmelders 1 mit einem zeitlich dazwischenliegenden binären Datensignal D zur Ausgabe melderseitiger Daten DAT.

Mit TP ist die Periode der gepulsten Signalfolge S bezeichnet. Sie liegt typischerweise in einem Bereich von 1 bis 10 Sekunden. Mit TS ist die Sendezeitdauer einer einzelnen Signalfolge S bezeichnet. Sie liegt typischerweise in einem Bereich von 0.5 bis 2 Millisekunden.

Gemäss der Erfindung wird zwischen zwei ausgesandten gepulsten Signalfolgen S ein gepulstes Datensignal D ausgegeben, welches die aktuelle Signalstärke SIG sowie die Melderdaten DAT kodiert. Die Dauer eines solchen Datensignals D ist abhängig von der Datenmenge, d.h. von der Anzahl der übertragenen Daten sowie deren digitalen Auflösung. Die Übertragung der Daten erfolgt vorzugsweise moduliert mit einer Trägerfrequenz, wie z.B. mit 36 oder 40 kHz. Wird z.B. für eine trägerfrequenzmodulierte Übertragung eines einzigen Bits eine Zeitspanne von 1 Millisekunde angesetzt, so können z.B. ohne weiteres 1000 Bits zwischen zwei Signalfolgen S mit einer Periode TP von 2 Sekunden übertragen werden.

Die Übertragung der Melderdaten DAT kann jeweils zwischen zwei Signalfolgen S erfolgen. Sie kann nur in jeder zweiten, dritten, vierten Periode usw. bis zur 50. Periode zwischen zwei Signalfolgen S erfolgen, um den Leistungsbedarf des Streulichtmelders 1 zu minimieren.

Die Übertragung der Melderdaten DAT kann auf einem Datenübertragungsprotokoll für Infrarotkommunikation basieren, insbesondere auf einem IRDA-Standard oder auf Datenübertragungsprotokoll für Infrarot-Fernbedienungen. Die Datenübertragung kann erfolgt vorzugsweise nur dann, wenn der erfindungsgemässe Streulichtrauchmelder 1 mittels des Prüfgeräts 10 in einem Servicemodus geschaltet worden ist.

Die Datenübertragung kann unabhängig davon auch im normalen Betriebsmodus erfolgen, und dies z.B. in jeder Periode oder nur in jeder zweiten, dritten, vierten Periode usw. bis zur 50. Periode zwischen zwei Signalfolgen S, um den Leistungsbedarf des Streulichtmelders 1 möglichst gering zu halten.

### Bezugszeichenliste

- 1: offener Streulichtrauchmelder
- 2: Meldergehäuse
- 3, 11: Steuereinheit, Steuereinrichtung, Mikrocontroller
- 4: Lichtsender, LED, IRED
- 5: Lichtempfänger, Photodiode, IR-Photodiode
- 6: Umgebungslichtsender, IRED
- 7: A/D-Umsetzer
- 8: Bandbassfilter
- 9: Signalaufbereiter, Komparator, Verstärker
- 10: Prüfgerät, Smartphone
- 12: Anzeigeeinheit, Display
- 13: Tastenfeld, Eingabefeld
- 14: Taster, Teststarttaster
- 15: Lichtsendeeinheit, LED, IRED
- 16: Lichtempfangseinheit, Photodiode, IR-Photodiode
- 17: Abstandsmesseinrichtung, Entfernungsmesser

- AB: Abstandswert, Distanzwert
- AL: Brandalarm, Alarmmeldung, Warnmeldung
- CODER: Kodiererblock
- D: binäres Datensignal
- DAT: Melderdaten
- DECODER: Dekodiererblock
- DR: Detektionsraum, Streulichtbereich
- GAIN: Verstärkungsgrad
- IR: Infrarotsignal, Lichtsignal
- IR': phasenverzögertes Infrarotsignal, Lichtsignal
- LASER: Laserstrahl
- ML: Melderlinie, Melderbus, Zweidrahtleitung
- OB: Warnmeldung
- PEB: Phasenermittlungsblock
- PRG: Programm, Applikation
- R: empfangene Signalfolge
- RB: Rauchdetektionsblock
- S: gepulste Signalfolge, gesendete Signalfolge
- SIG: Signalstärkewert, Signalstärke
- t: Zeit, Zeitachse
- TEST: Testtaste gedrückt
- TP: Periode, Periodendauer
- TS: Sendezeitdauer
- TST: Schaltsignal, Servicesignal
- VAB: Verstärkungsanpassungsblock
- VB: Verzögerungsblock
- ϕ: Phasenwinkel
- ϕ₀: Mindestwinkelwert
- ϕ₁, ϕ₂, ϕₙ: weiterer Mindestwinkelwert

## Patentansprüche

1. Offener Streulichtrauchmelder (1) mit einem ausserhalb des Melders (1) liegenden Detektionsraum (DR) für die Rauchdetektion, mit einem zugehörigen Lichtsender (4) zum Aussenden von Licht und mit einem spektral darauf abgestimmten Lichtempfänger (5), wobei der Streulichtrauchmelder (1) eine mit dem Lichtsender (4) und dem Lichtempfänger (5) verbundene Steuereinheit (3) aufweist, und wobei die Steuereinheit (3) dazu eingerichtet ist, den Lichtsender (4) wiederholt mit einer gepulsten Signalfolge (S) zum Aussenden entsprechender Lichtimpulse anzusteuern sowie eine empfangene Signalfolge (R) des Lichtempfängers (5) zeitlich auszuwerten und einen Brandalarm (AL) auszugeben, falls eine Signalstärke (SIG) der empfangenen Signalfolge (R) einen Mindestwert für die Rauchkonzentration überschreitet, **dadurch gekennzeichnet,**
**dass** die Steuereinheit (3) dazu eingerichtet ist, den Streulichtrauchmelder (1) von einem normalen Betriebsmodus in einen Servicemodus zu schalten, falls ein melderseitig ermittelter Phasenwinkel (ϕ) zwischen einer ausgesendeten und empfangenen Signalfolge (S, R) um einen Mindestwinkelwert (ϕ₀) zunimmt, der laufzeittechnisch einer Zunahme der optischen Wegstrecke von Lichtsender (4) zu Lichtempfänger (5) von mehr als 6 m, insbesondere von als 10 m entspricht.

2. Melder nach Anspruch 1, wobei die Steuereinheit (3) dazu eingerichtet ist, den Streulichtrauchmelder (1) in Abhängigkeit des melderseitig ermittelten Phasenwinkels (ϕ) in zumindest einen weiteren Servicemodus zu schalten, wobei dem jeweiligen weiteren Servicemodus ein weiterer Mindestwinkelwert (ϕ₁, ϕ₂, ϕₙ) zugeordnet ist, der grösser ist als der Mindestwinkelwert (ϕ₀), und wobei die jeweiligen weiteren Mindestwinkelwerte ((ϕ₁, ϕ₂, ϕₙ) voneinander verschieden sind.

3. Melder nach Anspruch 1 oder 2, wobei die Steuereinheit (3) des Melders (1) dazu eingerichtet ist, die Ausgabe eines Brandalarms (AL) in einem detektierten Brandfall individuell in einem jeweiligen Servicemodus zu unterdrücken.

4. Melder nach einem der vorherigen Ansprüche, wobei der Melder (1) eine Phasenermittlungseinrichtung (PEB) zur Ermittlung eines aktuellen Phasenwinkels (ϕ) zwischen einer ausgesendeten und empfangenen Signalfolge (S, R) aufweist und wobei die Phasenermittlungseinrichtung (PEB) ein Servicesignal (TST) ausgibt, falls der ermittelte aktuelle Phasenwinkel (ϕ) insbesondere abrupt um den Mindestwinkelwert (ϕ₀) zunimmt oder um zumindest einen der weiteren Mindestwinkelwerte ((ϕ₁, ϕ₂, ϕₙ) zunimmt.

5. Melder nach Anspruch 4, wobei der Mindestwinkelwert (ϕ₀) in einem Bereich von 10° bis 360° liegt, insbesondere bei 180° ± 30° liegt.

6. Melder nach einem der vorherigen Ansprüche, wobei die Steuereinheit (3) dazu eingerichtet ist, den Streulichtrauchmelder (1) für eine Mindestzeit vom normalen Betriebsmodus in den jeweiligen Servicemodus zu schalten und/oder den Streulichtrauchmelder (1) bei bereits vorliegendem jeweiligen Servicemodus wieder in den normalen Betriebsmodus zu schalten, falls der melderseitig ermittelte Phasenwinkel (ϕ) erneut um den Mindestwinkelwert (ϕ) oder um den jeweiligen weiteren Mindestwinkelwert (ϕ₁, ϕ₂, ϕₙ) zunimmt.

7. Melder nach einem der vorherigen Ansprüche, wobei die Steuereinheit (3) eingerichtet, das Vorliegen des Servicemodus optisch und/oder akustisch am Melder anzuzeigen und/oder das Vorliegen über einen angeschlossenen drahtgebundenen oder drahtlosen Melderbus an eine Gefahrenmeldezentrale zu signalisieren.

8. Melder nach einem der vorherigen Ansprüche, wobei die Steuereinheit (3) dazu eingerichtet ist, im Servicemodus den Lichtsender (4) oder einen weiteren Lichtsender (6) des Melders mit einem binären Datensignal (D) anzusteuern, welches interne Melderdaten (DAT) kodiert, wobei die Melderdaten (DAT) eine die aktuelle Signalstärke (SIG) der empfangenen Signalfolge (R), Kalibrierungsdaten für den optischen Pfads des Melders, Konfigurationsdaten, Betriebsdaten, eine Positionsangabe des Melder-Montageorts, eine Seriennummer und/oder eine Busadresse des Melders umfassen.

9. Melder nach Anspruch 8, wobei das Datensignal (D) als Bitfolge, als Folge eines Manchester-Codes, eines Biphase-Mark-Codes, eines Return-to-Zero-Codes, eines Puls-Positions-Codes oder eines Puls-Breiten-Codes kodiert ist.

10. Melder nach Anspruch 8 oder 9, wobei das Datensignal (D) auf einem Datenübertragungsprotokoll für Infrarotkommunikation basiert, insbesondere auf einem IRDA-Standard oder auf Datenübertragungsprotokoll für Infrarot-Fernbedienungen.

11. Prüfgerät zum Prüfen eines Streulichtrauchmelders (1) nach einem der vorherigen Ansprüche, wobei das Prüfgerät eine spektral auf den Lichtsender (4, 6) und auf den Lichtempfänger (5) des Streulichtrauchmelders (1) abgestimmte Lichtempfangseinheit (16) und Lichtsendeeinheit (15) aufweist, wobei das Prüfgerät eine damit verbundene Steuereinrichtung (11) aufweist und wobei die Steuereinrichtung (11) dazu eingerichtet ist, ein mittels der Lichtempfangseinheit (16) empfangenes gepulstes Lichtsignal (IR) um zumindest den vorgegebenen Mindestwinkelwert (ϕ₀) oder um zumindest den jeweiligen vorgegebenen weiteren Mindestwinkelwert (ϕ₁, ϕ₂, ϕₙ) als verzögertes Lichtsignal (IR') mittels der Lichtsendeeinheit (15) verzögert auszugeben.

12. Prüfgerät nach Anspruch 11, wobei das Prüfgerät eine benutzerseitige Ausgabeeinheit (12) aufweist und wobei die Steuereinrichtung (11) dazu eingerichtet ist, das empfangene gepulste Lichtsignal (IR) auf eine mögliche gültige Kodierung hin zu analysieren, mit welcher die aktuelle Signalstärke (SIG) des Streulichtrauchmelders (1) nach einem der Ansprüche 8 bis 10 und/oder die Kalibrierungsdaten des optischen Pfads der Streulichtanordnung, die Konfigurationsdaten, die Betriebsdaten, die Positionsangabe des Melder-Montageorts, die Seriennummer und/oder die Busadresse des Streulichtrauchmelders (1) kodiert ist bzw. kodiert sind.

13. Prüfgerät nach Anspruch 12, wobei die Steuereinrichtung (11) dazu eingerichtet ist, den Sendesignalpegel (GAIN) der Lichtsendeeinheit (15) und/oder die Phasenverschiebung für das auszugebende zeitverzögerte Lichtsignal (IR') mittels der Lichtsendeeinheit (15) basierend auf einem Abstand (AB) zwischen dem Prüfgerät und dem zu prüfenden Streulichtrauchmelder (1) anzupassen.

14. Prüfgerät nach Anspruch 13, wobei das Prüfgerät eine Abstandsmesseinrichtung (17) zur Erfassung des Abstands (AB) zwischen Prüfgerät und dem zu prüfenden Streulichtrauchmelder (1) aufweist und wobei der ermittelte Abstand (AB) durch die Steuereinrichtung (11) des Prüfgeräts erfassbar ist.

15. Prüfgerät nach einem der vorherigen Ansprüche 11 bis 14, wobei das Prüfgerät ein Smartphone, ein Tablet-PC oder ein Notebook ist.

## Claims

1. Open scattered light smoke alarm (1) for the detection of smoke, with a detection space (DR) lying outside the alarm (1), with an associated light transmitter (4) for emitting light and with a light receiver (5) which is spectrally matched to this, wherein the scattered light smoke alarm (1) has a control unit (3) which is connected to the light transmitter (4) and the light receiver (5), and wherein the control unit (3) is equipped for actuating the light transmitter (4) repeatedly with a pulsed signal sequence (S) to emit appropriate light pulses and to evaluate temporally a signal sequence (R) received by the light receiver (5), and to output a fire alarm (AL) if a signal strength (SIG) of the received signal sequence (R) exceeds a minimum value for the smoke concentration, **characterised in that**,
the control unit (3) is equipped for switching the scattered light smoke alarm (1) from a normal operating mode into a service mode if a phase angle (ϕ), determined on the alarm side, between an emitted and a received signal sequence (S, R) increases by a minimum angular value (ϕ₀) which, in terms of travel time, corresponds technically to an increase in the optical path length from the light transmitter (4) to the light receiver (5) of more than 6 m, in particular of more than 10 m.

2. Alarm according to claim 1, wherein the control unit (3) is equipped to switch the scattered light smoke alarm (1) into at least one further service mode, depending on the phase angle (ϕ) determined on the alarm side, wherein there is assigned to the further service mode concerned a further minimum angular value (ϕ₁, ϕ₂, ϕₙ), which is larger than the minimum angular value (ϕ₀), and wherein the further minimum angular values (ϕ₁, ϕ₂, ϕₙ) concerned are different from each other.

3. Alarm according to claim 1 or 2, wherein the control unit (3) of the alarm (1) is equipped to suppress individually for a particular service mode the output of a fire alarm (AL) in the event of a fire situation being detected.

4. Alarm according to one of the preceding claims, wherein the alarm (1) has a phase determination facility (PEB) for the determination of a current phase angle (ϕ) between an emitted and a received signal sequence (S, R) and wherein the phase determination facility (PEB) outputs a service signal (TST) if the current phase angle (ϕ) which is determined increases, in particular suddenly, by the minimum angular value (ϕ₀) or by at least one of the further minimum angular values (ϕ₁, ϕ₂, ϕₙ).

5. Alarm according to claim 4, wherein the minimum angular value (ϕ₀) lies in a range from 10° to 360°, in particular at 180° ± 30°.

6. Alarm according to one of the preceding claims, wherein the control unit (3) is equipped to switch the scattered light smoke alarm (1), for a minimum time, from the normal operating mode into the relevant service mode and/or if the service mode concerned is already in effect to switch the scattered light smoke alarm (1) back into the normal operating mode again, if the phase angle (ϕ) determined on the alarm side increases once again by the minimum angular value (ϕ₀) or by the relevant further minimum angular value (ϕ₁, ϕ₂, ϕₙ).

7. Alarm according to one of the preceding claims, wherein the control unit (3) is equipped to indicate visually and/or audibly at the alarm that the service mode is in effect, and/or to signal that it is in effect via a connected wired or wireless reporting bus to a danger monitoring centre.

8. Alarm according to one of the preceding claims, wherein the control unit (3) is equipped, in the service mode, to actuate by means of a binary data signal (D) the light transmitter (4) or a further light transmitter (6) of the alarm, which encodes internal alarm data (DAT), wherein the alarm data (DAT) includes the current signal strength (SIG) of the received signal sequence (R), calibration data for the alarm's optical path, configuration data, operating data, a positional specification for the alarm mounting site, a serial number and/or a bus address of the alarm.

9. Alarm according to claim 8, wherein the data signal (D) is encoded as a bit sequence, a Manchester code sequence, a biphase-mark code, a return-to-zero code, a pulse-position code or a pulse-width code.

10. Alarm according to claim 8 or 9, wherein the data signal (D) is based on a data transmission protocol for infrared communication, in particular on an IrDA standard or on a data transmission protocol for infrared remote controls.

11. Testing device for testing a scattered light smoke alarm (1) according to one of the preceding claims, wherein the testing device has a light receiving unit (16) and a light transmitting unit (15) which are spectrally matched to the light transmitters (4, 6) and the light receiver (5) of the scattered light smoke alarm (1), wherein the testing device has a control facility (11) connected to these and wherein the control facility (11) is equipped to output, by means of the light transmitting unit (15), a pulsed light signal (IR) which has been received by means of the light receiving unit (16), as a light signal (IR') delayed by at least the prescribed minimum angular value (ϕ₀) or by at least the relevant prescribed further minimum angular value (ϕ₁, ϕ₂, ϕₙ).

12. Testing device according to claim 11, wherein the testing device has an output unit (12) on the user side and wherein the control facility (11) is equipped to analyse the pulsed light signal (IR) which is received for a possible valid encoding, by which is or are encoded the current signal strength (SIG) for the scattered light smoke alarm (1) according to one of claims 8 to 10 and/or the calibration data for the optical path of the scattered light arrangement, the configuration data, the operating data, the positional specification of the alarm mounting site, the serial number and/or the bus address of the scattered light smoke alarm (1).

13. Testing device according to claim 12, wherein the control facility (11) is equipped to adjust the transmitted signal level (GAIN) of the light transmitting unit (15) and/ or the phase shift for the time-delayed light signal (IR') which is to be emitted by means of the light transmitting unit (15), on the basis of a distance (AB) between the testing device and the scattered light smoke alarm (1) which is to be tested.

14. Testing device according to claim 13, wherein the testing device has a distance measurement facility (17) for determining the distance (AB) between the testing device and the scattered light smoke alarm (1) which is to be tested and wherein the distance (AB) which is determined can be registered by the control facility (11) of the testing device.

15. Testing device according to one of the preceding claims 11 to 14, wherein the testing device is a smartphone, a tablet PC or a notebook.

## Revendications

1. Détecteur de fumée à lumière diffuse ouvert (1) avec une chambre de détection (DR) située en dehors du détecteur (1) servant à détecter la fumée, avec un émetteur de lumière (4) associé servant à émettre de la lumière et avec un récepteur de lumière (5) réglé spectralement sur celui-ci, le détecteur de fumée à lumière diffuse (1) comportant une unité de commande (3) reliée à l'émetteur de lumière (4) et au récepteur de lumière (5), et l'unité de commande (3) étant conçue pour commander l'émetteur de lumière (4) à plusieurs reprises avec une séquence de signaux pulsés (S) afin qu'il émette des impulsions lumineuses correspondantes, ainsi que pour évaluer dans le temps une séquence de signaux reçus (R) du récepteur de lumière (5) et déclencher une alarme d'incendie (AL) si une intensité de signal (SIG) de la séquence de signaux reçus (R) dépasse une valeur minimale pour la concentration de fumée, **caractérisé en ce que** l'unité de commande (3) est conçue pour faire passer le détecteur de fumée à lumière diffuse (1) d'un mode de fonctionnement normal à un mode service si un angle de phase (ϕ) déterminé côté détecteur entre une séquence de signaux reçus et une séquence de signaux émis (S, R) augmente d'une valeur d'angle minimale (ϕ₀) qui correspond en termes de temps de parcours à une augmentation de la longueur de chemin optique entre émetteur de lumière (4) et récepteur de lumière (5) de plus de 6 m, en particulier de plus de 10 m.

2. Détecteur selon la revendication 1, l'unité de commande (3) étant conçue pour faire passer le détecteur de fumée à lumière diffuse (1), en fonction de l'angle de phase (ϕ) déterminé côté détecteur, à au moins un autre mode service, audit autre mode service respectif étant associée une autre valeur d'angle minimale (ϕ₁, ϕ₂, ϕₙ) qui est supérieure à la valeur d'angle minimale (ϕ₀), et les autres valeurs d'angle minimales respectives (ϕ₁, ϕ₂, ϕₙ) étant différentes les unes des autres.

3. Détecteur selon la revendication 1 ou 2, l'unité de commande (3) du détecteur (1) étant conçue pour supprimer individuellement le déclenchement d'une alarme d'incendie (AL) dans un mode service respectif lorsqu'un cas d'incendie est détecté.

4. Détecteur selon l'une des revendications précédentes, le détecteur (1) comprenant un dispositif de détermination de phase (PEB) servant à déterminer un angle de phase actuel (ϕ) entre une séquence de signaux émis et une séquence de signaux reçus (S, R), et le dispositif de détermination de phase (PEB) délivrant un signal de service (TST) si l'angle de phase actuel (ϕ) déterminé augmente notamment de façon abrupte de la valeur d'angle minimale (ϕ₀) ou s'il augmente de l'une au moins des autres valeurs d'angle minimales (ϕ₁, ϕ₂, ϕₙ).

5. Détecteur selon la revendication 4, la valeur d'angle minimale (ϕ₀) étant comprise entre 10° et 360°, notamment de 180° ± 30°.

6. Détecteur selon l'une des revendications précédentes, l'unité de commande (3) étant conçue pour faire passer le détecteur de fumée à lumière diffuse (1) pour un temps minimal du mode de fonctionnement normal au mode service respectif et/ou, lorsque le mode service respectif est déjà établi, pour faire passer le détecteur de fumée à lumière diffuse (1) de nouveau au mode de fonctionnement normal si l'angle de phase (ϕ) déterminé côté détecteur augmente de nouveau de la valeur d'angle minimale (ϕ₀) ou de l'autre valeur d'angle minimale respective (ϕ₁, ϕ₂, ϕₙ).

7. Détecteur selon l'une des revendications précédentes, l'unité de commande (3) étant conçue pour indiquer optiquement et/ou acoustiquement l'établissement du mode service sur le détecteur et/ou pour signaler l'établissement à une centrale de signalisation de danger, via un bus de détecteur connecté filaire ou sans fil.

8. Détecteur selon l'une des revendications précédentes, l'unité de commande (3) étant conçue pour commander en mode service l'émetteur de lumière (4) ou un autre émetteur de lumière (6) du détecteur avec un signal de données binaire (D) codant des données de détecteur (DAT) internes, les données de détecteur (DAT) comprenant l'intensité de signal actuelle (SIG) de la séquence de signaux reçus (R), des données de calibrage pour le chemin optique du détecteur, des données de configuration, des données de fonctionnement, une indication de position du lieu de montage du détecteur, un numéro de série et/ou une adresse de bus du détecteur.

9. Détecteur selon la revendication 8, le signal de données (D) étant codé comme suite de bits, comme suite d'un code Manchester, d'un code Mark biphase, d'un code retour-à-zéro, d'un code d'impulsions en position ou d'un code d'impulsions en largeur.

10. Détecteur selon la revendication 8 ou 9, le signal de données (D) étant basé sur un protocole de transmission de données pour communication infrarouge, en particulier sur un standard IRDA ou sur un protocole de transmission de données pour commandes à distance infrarouge.

11. Appareil de contrôle pour contrôler un détecteur de fumée à lumière diffuse (1) selon l'une des revendications précédentes, l'appareil de contrôle comportant une unité de réception de lumière (16) et une unité d'émission de lumière (15) réglées sur l'émetteur de lumière (4, 6) et sur le récepteur de lumière (5) du détecteur de fumée à lumière diffuse (1), l'appareil de contrôle comportant un dispositif de commande (11) relié à celles-ci, et le dispositif de commande (11) étant conçu pour délivrer un signal de lumière pulsé (IR) reçu au moyen de l'unité de réception de lumière (16), avec un retard correspondant au moins à la valeur d'angle minimale (ϕ) prédéterminée ou au moins à l'autre valeur d'angle minimale respective (ϕ₁, ϕ₂, ϕₙ) déterminée, comme signal de lumière retardé (IR'), au moyen de l'unité d'émission de lumière (15).

12. Appareil de contrôle selon la revendication 11, l'appareil de contrôle comportant une unité de sortie (12) côté utilisateur, et le dispositif de commande (11) étant conçu pour analyser le signal de lumière pulsé reçu (IR) quant à un possible codage valide avec lequel l'intensité de signal actuelle (SIG) du détecteur de fumée à lumière diffuse (1) selon l'une des revendications 8 à 10 et/ou les données de calibrage du chemin optique du dispositif à lumière diffuse, les données de configuration, les données de fonctionnement, l'indication de position du lieu de montage du détecteur, le numéro de série et/ou l'adresse de bus du détecteur de fumée à lumière diffuse (1) est/sont codé(es).

13. Appareil de contrôle selon la revendication 12, le dispositif de commande (11) étant conçu pour adapter le niveau de signal d'émission (GAIN) de l'unité d'émission de lumière (15) et/ou le décalage de phase pour le signal de lumière retardé (IR') à délivrer, au moyen de l'unité d'émission de lumière (15), sur la base d'une distance (AB) entre l'appareil de contrôle et le détecteur de fumée à lumière diffuse (1) à contrôler.

14. Appareil de contrôle selon la revendication 13, l'appareil de contrôle comportant un dispositif de mesure de distance (17) servant à déterminer la distance (AB) entre l'appareil de contrôle et le détecteur de fumée à lumière diffuse (1) à contrôler, et la distance (AB) déterminée pouvant être détectée par le dispositif de commande (11) de l'appareil de contrôle.

15. Appareil de contrôle selon l'une des revendications précédentes 11 à 14, l'appareil de contrôle étant un smartphone, une tablette ou un ordinateur portable.
